# EUROPÄISCHE PATENTSCHRIFT

(11) **EP 1 555 499 B1**
(45) Veröffentlichungstag und Bekanntmachung des Hinweises auf die Patenterteilung: **16.02.2011**
(21) Anmeldenummer: 04030197.0
(22) Anmeldetag: 20.12.2004
(51) Int. Cl.: F27B 1/02, A61C 13/20, G01J 3/46, G01J 3/52, G06F 19/00

(54) **Brennofen sowie Verfahren für den Betrieb eines Brennofens für den Dentalbereich**
Kiln as well as method for operating a kiln for dentistry
Four ainsi que procédé pour actionner un four dans le domaine dentaire

(30) Priorität: 19.01.2004 DE 102004002724
(43) Veröffentlichungstag der Anmeldung: 20.07.2005
(60) Teilanmeldung: 07025086.5
(73) Patentinhaber: Ivoclar Vivadent AG, 9494 Schaan (LI)
(72) Erfinder: Grünenfelder, Robert, 9492 Eschen (LI); Rohner, Gottfried, 9450 Altstätten (CH)
(74) Vertreter: Baronetzky, Klaus

(56) Entgegenhaltungen:
- WO-A-00/25696
- DE-A1- 19 754 077
- DE-A1- 19 824 497
- US-B1- 6 488 503

## Beschreibung

Die Erfindung betrifft einen Brennofen, gemäß Anspruch 1, sowie ein Verfahren für den Betrieb eines Brennofens für den Dentalbereich, gemäß Anspruch 20.

Ein derartiger Brennofen ist beispielsweise aus der DE-OS 197 54 077 bekannt. Bei diesem Brennofen werden verschiedene Ofenparameter über Anzeigemittel angezeigt, und zwar in verschiedenen Farben. Hierdurch soll gewährleistet sein, dass der Bediener des dortigen Brennofens für den Dentalbereich die richtige Brennkurve wählt, und es soll beispielsweise optisch umgebend verglichen werden können, wie sich Brennkammertemperatur und Brennobjekttemperatur unterscheiden. Auch ein Soll-/Istwertvergleich ist vorgesehen.

Während die Brenntemperatur für die Bereitstellung des erwünschten Zahnersatzes in hoher Qualität nicht unwichtig ist, werden heutzutage vielfach auch besondere Anforderungen an die Farbgebung des Restaurates gestellt, dass sich harmonisch in den Mund des Patienten einfügen soll. Die Bereitstellung eines entsprechenden Farbtones ist recht aufwendig, denn ein Ausgangs-Farbton ändert sich durch den Brennvorgang. Zudem weisen natürliche Zähne eine spezielle Schichtung auf, und die Realisierung der erwünschten Transluzenz macht die Farbgebung nicht leichter. Um ästhetisch einigermaßen befriedigende Ergebnisse zu erzielen, hat man auch Maltechniken eingesetzt, die in einem nachgeschaltetem Schritt realisiert werden.

Ferner ist es auch bekannt geworden, über spezielle computergestütze Maßnahmen, die erwünschte Zahnfarbe festzulegen und entsprechende Bilddaten dem Zahntechniker zu übermitteln. Hierzu ist es auch bereits vorgeschlagen worden, über eine Kamera eine Aufnahme vorhandener Zähne zu tätigen, die dann für die Bereitstellung der vorgegebenen Zahnfarben verwendet wird. Ein Beispiel für eine derartige Lösung ist die EP-A1 1 043 959.

Bei derartigen Lösungen werden die Zahnfarben nach Gefühl und visuellen Vergleich durch den Zahntechniker oder gegebenenfalls durch den Zahnartz festgelegt, und es werden entsprechende Anweisungen für die Auswahl der Zahfarben mit der entsprechenden Farbkennzeichen (auch z.B. A2, C1 oder dergleichen) vorgegeben. Der Zahn wird dann - in entsprechende Flächenbereiche aufgeteilt und es werden entsprechende Zahnfarben bei der Restauration eingesetzt.

Der Zahntechniker hat die betreffenden Flächenbereiche dann bei der Zahnherstellung in ausgedrucktem Zustand oder in anderer geeigneter Form vor sich und soll nun den entsprechenden Zahn preparieren.

Trotz dieser Hilfsmittel sind häufig die Ergebnisse der Restauration nicht befriedigend. Beispielsweise kann es auch zu Mißverständnissen oder Fehlinterpretationen hinsichtlich der Codierungen der betreffenden Flächenbereiche kommen, insbesondere, wenn die betreffenden Zahnfarben vom Zahnarzt handschriftlich festgelegt werden. Zudem lässt gerade ein Schwarz-/Weiß-Ausdruck die optische Wirkung des zu restaurierenden Zahnes schlecht beurteilen, so dass es insofern stark auf die Erfahrung sowohl des Zahnarztes als auch des Zahntechnikers ankommt, was das Ergebnis der Restauration angeht.

Auch besteht die Gefahr, dass Verwechslungen vorkommen, gerade dann, wenn beispielsweise mehrere Zähne für den gleichen Patienten hergestellt werden sollen, die sich dann in ihrer Farbgebung regelmäßig recht wenig unterscheiden.

Während Farbschwankungen und kleinere Fehler im Molarbereich toleriert werden, sollte der Frontzahnbereich ästhetisch besonders ansprechend wirken.

Daher liegt der Erfindung die Aufgabe zugrunde, einen Brennofen bzw. ein Verfahren für den Betrieb eines Brennofens zu schaffen, der bzw. das ästhetisch verbesserte Ergebnisse gerade auch bei der Herstellung von Zähnen im Frontzahnbereich liefert und dessen Zuverlässigkeit verbessert ist.

Diese Aufgabe wird erfindungsgemäß durch Anspruch 1 bzw. 20 gelöst. Vorteilhafte Weiterbildungen ergeben sich aus den Unteransprüchen.

Vorzugsweise bilden die Flächenbereiche in ihrer Zusammenschau einen Frontzahn in der Vorderansicht . Die Flächenbereiche weisen je eine in sich einheitliche Farbe, ein in sich einheitliches Muster oder dergleichen auf. Flächenbereiche gleicher Zahnfarbe haben das gleiche optische Merkmal, und es erfolgt insofern eine eindeutige Zuordnung zwischen der erwünschten Zahnfarbe und der zu verwendenden Zahnfarbe, aber auch deren Grenzlinien, also der Festlegung, wo die nächste Zahnfarbe verwendet werden soll.

Bevorzugt erfolgt die Kodierung nach einem an sich bekannten Zahnfarbschema, und die Anzahl der Flächenbereiche ist ebenfalls begrenzt, so dass beispielsweise fünf verschiedene Zahnfarben für den Frontzahn eingesetzt werden können. Dies schließt nicht aus, dass eine größere Anzahl von Flächenbereichen, wie beispielsweise auch 20 Flächenbereiche auf dem Bildschirm dargestellt werden, so dass sie optisch unterscheidbar dem Zahntechniker die Information liefern, wie der zu restaurierende Zahn genau auszusehen hat.

Die Bereitstellung dieser Farbinformationen kann in erfindungsgemäß besonders günstiger Weise computergestützt erfolgen. Beispielsweise lässt sich das von der Dentalkamera aufgenommene Bild, beispielsweise des Nachbarzahnes, elektronisch in entsprechende Referenzfarben umsetzen, indem ein Farbähnlichkeitsvergleich je Farbpunkt vorgenommen wird und die entsprechende Farbe wiedergegeben wird.

Erfindungsgemäß besonders ist es dann, dass die betreffenden Daten zusammen mit dem Auftrag an das Dentallabor in geeigneter Weise übermittelt werden, also beispielsweise per Chipkarte, per E-Mail, per Diskette oder beispielsweise auch durch eine hierfür gebrannte CD. Durch die unmittelbare räumliche Nähe der Anzeigevorrichtung an dem Brennofen ist sichergestellt, dass der Zahntechniker gerade beim Brennen, bzw. dem Beschicken des Brennofens den zu restaurierenden Zahns im Blickfeld hat, so dass die Wahrscheinlichkeit, dass es zu Verwechslungen kommt, deutlich reduziert ist. Auf die Richtigkeit etwaiger handschriftlicher Notizen kommt es nicht an, denn die Dentalkamera liefert - entsprechenden Farbabgleich vorausgesetzt - zuverlässig die erwünschten Farben für das Restaurat.

In einer weiteren vorteilhaften Ausgestaltung ist es vorgesehen, dass der Bildschirm in räumlicher Nähe zu dem Brennofen, insbesondere mit diesem in Verbindung stehend, angeordnet ist.

In einer weiteren vorteilhaften Ausgestaltung ist es vorgesehen, dass der Brennofen für das Brennen eines Zahnes bestimmt ist, der auf dem Bildschirm schematisch in Flächenbereiche aufgeteilt dargestellt ist, oder für das Brennen mehrerer Zähne, von denen mindestens einer auf dem Bildschirm in Flächenbereiche aufgeteilt dargestellt ist.

In einer weiteren vorteilhaften Ausgestaltung ist es vorgesehen, dass die Flächenbereiche je unterschiedlichen Zahnfarbenbereichen wenigstens eines zu brennenden Zahnes entsprechen, dass sie je zusammenhängend ausgebildet sind und dass aneinander angrenzende Flächenbereiche gegeneinander übergangslos abgegrenzt sind.

In einer weiteren vorteilhaften Ausgestaltung ist es vorgesehen, dass je in der gleichen Farbe vorliegende Flächenbereiche gleichen Zahnfarben entsprechen und dass die Flächenbereiche zusätzlich mit einer Zahnfarben-Kodierung wie "C1", "D2" oder einer anderen Zahnfarbenkodierung versehen sind, welche auf dem Bildschirm innerhalb oder außerhalb des Flächenbereiches dargestellt sind.

In einer weiteren vorteilhaften Ausgestaltung ist es vorgesehen, dass der Bildschirm mit einer Steuereinheit verbunden ist, die einen Dateneingang aufweist, über welchen ein Bild und/oder eine Datei mit wenigstens den Zahnfarben der einzelnen Farbbereiche des Bildes in die Steuereinheit einspeisbar und in der Steuereinheit abspeisbar ist und dass für die Einspeisung des Bildes und die Datei ein Datenträgerlesegerät und/oder eine Dateneingangsschnittstelle vorgesehen ist .

In einer weiteren vorteilhaften Ausgestaltung ist es vorgesehen, dass sich die Flächenbereiche sich durch unterschiedlich farbige Flächen, Muster wie Schraffuren, Helligkeitswerte oder andere Muster voneinander unterscheiden und dass die Form der Flächenbereiche, die auf dem Bildschirm dargestellt sind, in ihrer Zusammenschau der Form eines herzustellenden Zahns entspricht.

In einer weiteren vorteilhaften Ausgestaltung ist es vorgesehen, dass zu den optisch unterscheidbaren Merkmalen auch Farbverläufe gehören, die mit besonders ausgestalteten Flächenbereichen darstellbar sind und dass in die Steuereinheit multimediale Informationen einspeisbar sind, die dann in Form akustischer Sequenzen wiedergegeben und/oder auf dem Bildschirm in Form bewegter Bilder dargestellt werden können.

In einer modifizierten Ausgestaltung der Erfindung ist es vorgesehen, dass die insbesondere dem zu brennenden Zahn betreffenden Informationen über einen Dateneingang in eine Steuereinheit einlesbar sind und wenigstens ein graphischer Teil der Informationen mit Hilfe der Steuereinheit auf dem Bildschirm darstellbar ist.

In einer weiteren vorteilhaften Ausgestaltung ist es vorgesehen, dass der Dateneingang ein Modem, eine Daten-Import/Export Schnittstelle des Brennofens und/oder ein mit dem Brennofen zusammenwirkendes Datenträgerlesegerät aufweist und dass die Information in Form elektronischer Dateien einlesbar ist.

In einer weiteren vorteilhaften Ausgestaltung ist es vorgesehen, dass es sich bei dem graphischen Teil der Information um eine jpg-, bmp-, tif-, pdf-, , ppt-, avi-, -Datei handelt und dass die Größe und/oder Position der graphischen Information auf dem Bildschirm mit Hilfe einer dem Bildschirm zugeordneten Eingabeeinheit veränderbar ist .

In einer weiteren vorteilhaften Ausgestaltung ist es vorgesehen, dass wenigstens die innerhalb der Außenkontur des Zahnes liegenden Flächenbereiche mit Farbinformation hinsichtlich der in diesen Flächenbereichen vorhandenen Zahnfarben des Zahnes versorgbar sind, und dass der Brennofen eine dem Bildschirm zugeordnete Eingabeeinheit aufweist, mit der ein über die Flächenbereiche oder Gruppen von Flächenbereichen des Bildschirms bewegbarer Cursor ansteuerbar ist und dass die Farbinformationen insbesondere als Zahnfarbe (z.B. D2) jeweils nur jenes Flächenbereiches oder jener Gruppe von Flächenbereichen auf dem Bildschirm angezeigt werden auf dem bzw. der sich der Cursor befindet und dass die Farbinformationen wenigstens eines Flächenbereiches oder Gruppen von Flächenbereichen des Bildschirms, welche innerhalb der Außenkontur des Zahnes liegen mit einer Vielzahl von in der Steuereinheit des Brennofens gespeicherten Zahnfarben vergleichbar sind und die übereinstimmende Zahnfarbe auf dem Bildschirm anzeigbar ist.

Ein erfindungsgemäßes Verfahren ist in Anspruch 20 definiert. Für den Betrieb eines Brennofens für den Dentalbereich, der eine Anzeigevorrichtung hat, ist es vorgesehen, dass die Anzeigevorrichtung ein Bildschirm ist und dass auf dem Bildschirm Flächenbereiche dargestellt werden, die zusammen gesehen im Wesentlichen mindestens einen Zahn in Front- und/oder Seitenansicht entsprechen und dass die Flächenbereiche gegeneinander abgegrenzt sind und jeder Flächenbereich ein unterschiedliches Merkmal, wie ein Muster, eine Farbe, eine Helligkeit oder dergleichen, aufweist und das jedes Merkmal einer Zahnfarbe des herzustellenden Zahns entspricht.

In einer weiteren vorteilhaften Ausgestaltung ist es vorgesehen, dass bei der Herstellung einer Datei für die Zahnfarbenwiedergabe der Zahn in Flächenbereiche mit ähnlicher Zahnfarbe aufgeteilt wird, wobei die Flächenbereiche aneinander angrenzen und dass in die Datei zusätzlich zu den in Grobdarstellung vorgegebenen Zahnfarbenbereichen patientenspezifische Daten abgespeichert sind und dass ein Bild mit der Darstellung wenigstens eines Zahnes und/oder die Datei vom Zahnarzt oder Zahntechniker in das Labor übermittelt werden, in dem der Brennofen aufgestellt ist.

In einer weiteren vorteilhaften Ausgestaltung ist es vorgesehen, dass das Bild und/oder die Datei über eine Datenschnittstelle und/oder ein Datenträgerlesegerät in eine Steuereinheit des Brennofens einlesbar ist und dass mit den Flächenbereichen in kodierter Form, also durch Farben, Schraffuren oder dergleichen, optisch unterscheidbare Merkmale des Nachbarzahns zu dem zu restaurierenden Zahn darstellbar sind und dass der Brennofen eine dem Bildschirm zugeordnete Eingabeeinheit aufweist, die einen Cursor steuert und dass die Zahnfarben der optisch unterscheidbaren Merkmale angezeigt werden, wenn der Cursor sich in einem der mindestens zwei Flächenbereich befindet .

In einer weiteren vorteilhaften Ausgestaltung ist es vorgesehen, dass die Zahnfarben jedens Flächenbereiches dann angezeigt wird, in dem sich der Cursor befindet und dass die Steuereinheit eine Vergleichseinheit aufweist, und dass in der Steuereinheit eine Vielzahl von Zahnfarben abgespeichert sind und dass die betreffende Zahnfarbe dann angezeigt wird, wenn ein Cursor auf dem Bildschirm sich in einem Flächenbereich befindet, der die betreffende Zahnfarbe anzeigt und dass mit dem Cursor mehrere Flächenbereiche als Gruppe zusammenfassbar sind, die Durchschnittsfarbe aller Flächenbereiche ermittelt und mit den abgespeicherten Zahnfarben verglichen sowie die betreffende Zahnfarbe angezeigt wird.

In einer weiteren vorteilhaften Ausgestaltung ist es vorgesehen, dass die Eingabeeinheit eine Zoom- und/oder Bewegungseinrichtung beinhaltet, mit der die Position des Bildes auf dem Bildschirm sowie Größe des auf dem Bildschirm dargestellten Bildes verändert und dass mit der Eingabeeinheit eine Art Rahmen um mehrere Bildpunkte oder Gruppen von Bildpunkten ziehbar ist, die Durchschnittsfarbe innerhalb dieses Rahmens ermittelt und mit den gespeicherten Zahnfarben verglichen wird und die übereinstimmende Zahnfarbe auf dem Bildschirm angezeigt wird .

Weitere Vorteile, Einzelheiten und Merkmale der Erfindung ergeben sich aus der nachfolgenden Beschreibung zweier Ausführungsbeispiele anhand der Zeichnung.

Es zeigen:
- Fig. 1: eine schematische perspektivische Ansicht eines erfindungsgemäßen Brennofens in einer ersten Ausführungsform;
- Fig. 2: eine Ansicht eines Details eines erfindungsgemäßen Brennofens, nämlich der Anzeigevorrichtung;
- Fig. 3: eine Ansicht der Anzeigevorrichtung gemäß Fig. 2, jedoch mit anderen Flächenbereichen;
- Fig. 4: eine schematische Ansicht einer weiteren Ausführungsform eines erfindungsgemäßen Brennofens; und
- Fig. 5: eine vergrößerte Ansicht eines Teils des Brennofens in der Ausführungsform gemäß Fig. 4.

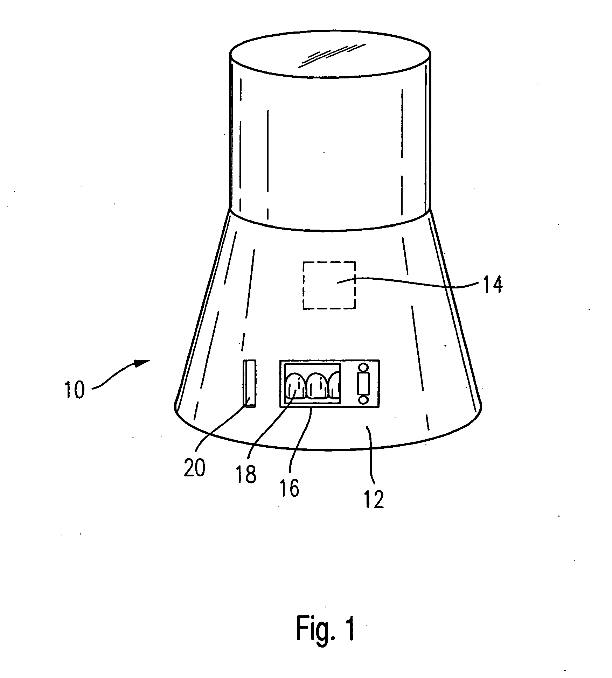

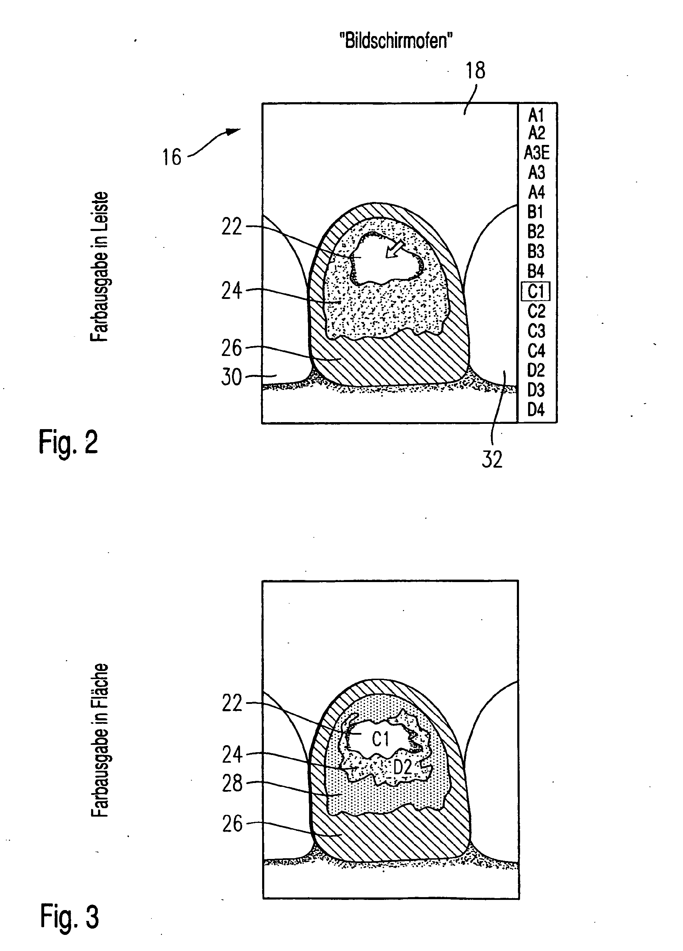

Der in Fig. 1 dargestellte Brennofen 10 weist Bedienelemente 12 auf, die auf eine schematisch angedeutete Steuervorrichtung 14 wirken. Die Steuervorrichtung dient der Steuerung unter anderem der Brennkurve nach den eingestellten Brennkurven. Sie stellt auch die Informationen bereit, die für den Zahntechniker sichtbar auf einer Anzeigevorrichtung 16 anzeigbar sind. Die Anzeigevorrichtung 16 zeigt die Umrisse eines Frontzahnes 18 und Flächenbereiche, die erfindungsgemäß in besonderer Weise ausgestaltet sind. Die Flächenbereiche selbst sind in den Fig. 2 und 3 dargestellt.

Ferner weist der Brennofen 10 eine geeignete Eingabevorrichtung auf. In dem dargestellten Ausführungsbeispiel ist der Leseschlitz 20 einer Chipkarte dargestellt, die zusammen mit dem Auftrag für das Brennen der erwünschten Restauration dem Zahntechniker zur Verfügung gestellt wird.

Es versteht sich, dass anstelle dessen andere Arten der Datenübermittlung möglich sind.

In Fig. 2 ist der Frontzahn 18 auf der Anzeigevorrichtung 16 im Einzelnen dargestellt. In dem dargestellten Ausführungsbeispiel weist er drei Flächenbereiche 22, 24 und 26 auf, die je im Wesentlichen zusammenhängend sind und unterschiedliche Farben des Zahnes wiedergeben. Hierzu ist der Flächenbereich 22 mit der Angabe "C1" kodiert, der der Farbtonwiedergabe oder Shade eines bekannten Farbschlüssels entspricht. Für den Flächenbereich 24 ist der Farbton D2 vorgegeben und für den Flächenbereich 26 der Farbton E1.

Auf der Anzeigevorrichtung erfolgt die Farbtonwiedergabe durch entsprechende Helligkeitsabstufungen oder Schraffierungen. Gemäß einer modifizierten Ausgestaltung sind unterschiedliche Farben für jeden Flächenbereich vorgesehen, wobei es sich versteht, dass diese Farbe nicht der tatsächlichen Zahnfarbe entspricht, sondern vielmehr eine deutliche Unterscheidung ermöglicht.

Ein komplexerer Aufbau von Zahnflächenbereichen ist aus Fig. 3 ersichtlich. Hier ist neben den drei Flächenbereichen 22, 24 und 26 ein vierter Flächenbereich 28 ausgebildet, wobei jeder Flächenbereich eine asymmetrische Form, die den natürlichen Farbverlauf annähert, aufweist und nur teilweise zusammenhängende Flächenbereiche vorliegen. Sogenannte Farbinseln sind durch geeignete optische Merkmale wie Schraffuren oder dergleichen als zusammengehörig gekennzeichnet.

Der zu restaurierende Zahn ist auf der Anzeigevorrichtung 16 in der Seitenansicht, also von vorne, vollständig zu sehen. Die mesial bzw. distal je benachbarten Frontzähne 30 und 32 sind je in einem kleinen Bereich abgeschnitten zu erkennen, wobei an dieser Stelle keine Flächenbereiche dargestellt sind.

Ein entsprechendes Bild lässt sich basierend auf dem von einer Dentalkamera aufgenommenen Bild nach entsprechender Bildbearbeitung zur Bereitstellung des erwünschten zu restaurierenden Zahns elektronisch unmittelbar bereitstellen, indem Schwellenwerte für jeden Farbton angegeben werden, die entsprechende Flächen bereitstellen.

Es versteht sich, dass zusammen mit der Übermittlung von Farbtonkarten auf die erfindungsgemäße Anzeigevorrichtung über die entsprechende Chipkarte auch die zugehörigen Patientendaten, einschließlich der genauen Identifikation des zu restaurierenden Zahns, übermittelt werden können.

In besonders günstiger Ausgestaltung der Erfindung ist es vorgesehen, die Steuervorrichtung 14 mit einer Vergleichsvorrichtung auszustatten, die dann auch mit den Rohdaten der Dentalkamera nach entsprechender Aufbereitung zur Herstellung der Bilddaten den zu restaurierenden Zahn gefüttert werden kann. Die Vergleichsvorrichtung erzeugt dann basierend auf Referenztabellen der vorhandenen Zahnfarben die Flächenbereiche, die dann auf der Anzeigevorrichung 16 dargestellt werden.

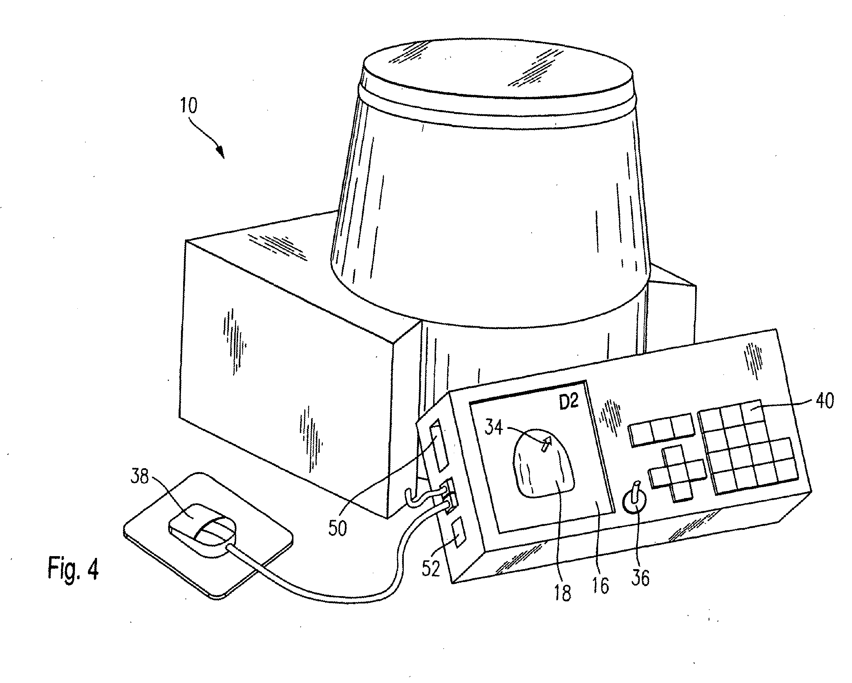

Der in Fig. 4 dargestellte Brennofen 10 weist einen Bildschirm als Anzeigevorrichtung 16 auf, der im Unterschied zu der Ausführungsform gemäß Fig. 1 separat aufgestellt ist, jedoch dem Brennofen benachbart ist. Auch hier ist ein Bild eines Frontzahnes 18 zu ersehen, das wiederum in Flächenbereiche aufgeteilt ist, auch wenn dies in Fig. 4 nicht dargestellt ist.

Auf dem Bildschirm befindet sich bei dieser Ausführungsform auch eine Zeigereinheit oder ein Cursor 34, der über eine Art Joystick 36 oder eine Maus 38 steuerbar ist. Wenn über die Steuerung mit dem Joystick 36 oder der Maus 38 ein bestimmter Flächenbereich angewählt ist, wird die zutreffende Zahnfarbe, beispielsweise "D2", wie es auf dem Bildschirm 16 dargestellt ist, angezeigt.

Über eine Tastatur lassen sich bestimmte Flächen wählen, wobei die Steuerung so vorgesehen ist, dass man eine Taste gedrückt halten kann und dann mit dem Cursor einen Rahmen auf dem Bildschirm erzeugt wird.

Vorzugsweise weist der Brennofen einen Datenträger-Lesegerät 50 und einen Dateneingang 52 auf, über den bzw. über die geeignete Dateien zur Übermittlung der gewünschten Information dem Brennofen zuleitbar sind.

Auch ist es möglich, die Schnittstelle 52 bidirektional auszubilden, um beispielsweise die erfolgreiche Datenübertragung zu bestätigen.

In einer weiter modifizierten Ausgestaltung ist es vorgesehen, auch auf dem Brennofen-Bildschirm eine Farbanalyse durch Farbvergleich durchzuführen. Hierzu lässt sich bevorzugt ein von einer Digitalkamera erstelltes Foto in digitaler Form über den Dateneingang 52 einlesen. Die Farbanalyse erfolgt dann durch Vergleich mit im Brennofen gespeicherten Zahnfarben.

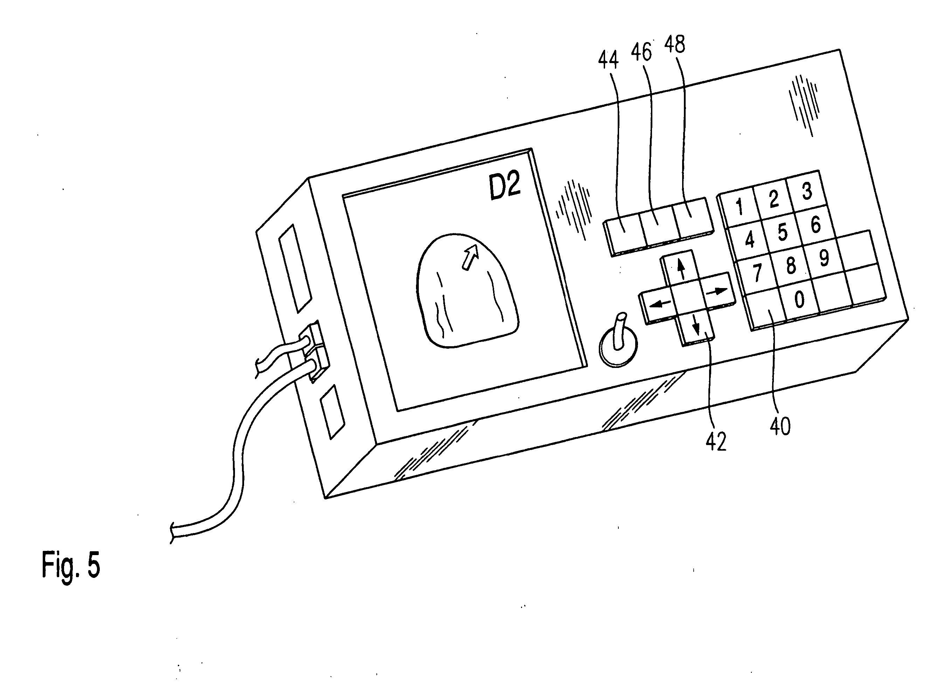

Aus Fig. 5 ist die Einheit aus Bildschirm, Tastatur und Zeigereinheit etwas vergrößert ersichtlich. Die Tastatur 40 weist auch Cursortasten 42 zur wahlweisen Bedienung auf, und je Tasten für "Vergrößerung" 44, "Verkleinerung" 46 und für "Bildschirmausschnitt verschieben" 48. Mit derartigen Tasten lässt sich beliebig auch eine Farbe festlegen bzw. eine Art Bearbeitung vornehmen.

## Patentansprüche

1. Brennofen für dentale Restaurationsteile, mit einer Anzeigevorrichtung mit einem Bildschirm zur Anzeige von Informationen, wobei der Bildschirm (16) mindestens zwei, insbesondere wenigstens drei Flächenbereiche (22, 24, 26) aufweist, mit denen optisch unterscheidbare Merkmale, wie unterschiedliche Farben, Muster oder Strukturen, wiedergebbar sind, und wobei die Flächenbereiche (22, 24, 26) sich zusammen im Wesentlichen zu wenigstens einem Zahn in Front- und/oder Seitenansicht ergänzen wobei der Brennofen (10) eine Steuervorrichtung (14) aufweist, die der Steuerung unter anderem der Brennkurve nach den eingestellten Brennkurven dient, und wobei die Steuervorrichtung (14) auch die Informationen bereitstellt, die für den Zahn teckniker sichtbar auf der Anzeigevorrichtung anzeigbar sind.

2. Brennofen, nach Anspruch 1, **dadurch gekennzeichnet, dass** die Flächenbereiche (22, 24, 26) je unterschiedlichen Zahnfarbenbereichen wenigstens eines zu brennenden Zahnes entsprechen.

3. Brennofen nach Anspruch 1 oder 2, **dadurch gekennzeichnet, dass** die Flächenbereiche (22, 24, 26) je zusammenhängend ausgebildet sind.

4. Brennofen nach einem der vorhergehenden Ansprüche, **dadurch gekennzeichnet, dass** aneinander angrenzende Flächenbereiche (22, 24, 26) gegeneinander übergangslos abgegrenzt sind.

5. Brennofen nach einem der vorhergehenden Ansprüche, **dadurch gekennzeichnet, dass** je in der gleichen Farbe vorliegende Flächenbereiche (22, 24, 26) gleichen Zahnfarben entsprechen.

6. Brennofen nach einem der vorhergehenden Ansprüche, **dadurch gekennzeichnet, dass** die Flächenbereiche (22, 24, 26) zusätzlich mit einer Zahnfarben-Kodierung wie "C1", "D2" oder einer anderen Zahnfarbenkodierung versehen sind, welche auf dem Bildschirm (16) innerhalb oder außerhalb des Flächenbereiches (22, 24, 26) dargestellt ist.

7. Brennofen nach einem der vorhergehenden Ansprüche, **dadurch gekennzeichnet, dass** der Bildschirm (16) mit der Steuervorrichtung verbunden ist, die einen Dateneingang (52) aufweist, über welchen ein Bild und/oder eine Datei mit wenigstens den Zahnfarben der einzelnen Farbbereiche des Bildes in die Steuervorrichtung einspeisbar und in der Steuervorrichtung abspeischerbar ist.

8. Brennofen nach Anspruch 7, **dadurch gekennzeichnet, dass** für die Einspeisung des Bildes und die Datei ein Datenträgerlesegerät (50) und/oder eine Dateneingangsschnittstelle vorgesehen ist.

9. Brennofen nach einem der vorhergehenden Ansprüche, **dadurch gekennzeichnet, dass** sich die Flächenbereiche (22, 24, 26) sich durch unterschiedlich farbige Flächen, Muster wie Schraffuren, Helligkeitswerte oder andere Muster voneinander unterscheiden.

10. Brennofen nach einem der vorhergehenden Ansprüche, **dadurch gekennzeichnet, dass** die Form der Flächenbereiche (22, 24, 26), die auf dem Bildschirm (16) dargestellt sind, in ihrer Zusammenschau der Form eines herzustellenden Zahns entspricht.

11. Brennofen nach einem der vorhergehenden Ansprüche, **dadurch gekennzeichnet, dass** zu den optisch unterscheidbaren Merkmalen auch Farbverläufe gehören, die mit besonders ausgestalteten Flächenbereichen (22, 24, 26) darstellbar sind.

12. Brennofen nach einem der vorhergehenden Ansprüche, **dadurch gekennzeichnet, dass** in die Steuervorrichtung multimediale Informationen einspeisbar sind, die dann in Form akustischer Sequenzen wiedergegeben und/oder auf dem Bildschirm (16) in Form bewegter Bilder dargestellt werden können.

13. Brennofen nach einem der vorhergehenden Ansprüche, **dadurch gekennzeichnet, dass** die Information in Form elektronischer Dateien einlesbar ist.

14. Brennofen nach Anspruch 13, **dadurch gekennzeichnet, dass** der Dateneingang (52) ein Modem, eine Daten-Import/Export Schnittstelle des Brennofens (10) und/oder ein mit dem Brennofen (10) zusammenwirkendes Datenträgerlesegerät (50) aufweist.

15. Brennofen nach Anspruch 13, **dadurch gekennzeichnet, dass** es sich bei dem graphischen Teil der Information um eine jpg-, bmp- , tif-, pdf-, ppt-, avi- -Datei handelt.

16. Brennofen nach einem der vorhergehenden Ansprüche, **dadurch gekennzeichnet, dass** die Größe und/oder Position der graphischen Information auf dem Bildschirm (16) mit Hilfe einer dem Bildschirm (16) zugeordneten Eingabeeinheit veränderbar ist.

17. Brennofen nach Anspruch 1, **dadurch gekennzeichnet, dass** wenigstens die innerhalb der Außenkontur des Zahnes liegenden Flächenbereiche (22, 24, 26) mit Farbinformation hinsichtlich der in diesen Flächenbereichen vorhandenen Zahnfarben des Zahnes versorgbar sind.

18. Brennofen nach Anspruch 17, **dadurch gekennzeichnet, dass** der Brennofen (10) eine dem Bildschirm (16) zugeordnete Eingabeeinheit aufweist, mit der ein über die Flächenbereiche (22, 24, 26) oder Gruppen von Flächenbereichen (22, 24, 26) des Bildschirms (16) bewegbarer Cursor (34) ansteuerbar ist und dass die Farbinformationen insbesondere als Zahnfarbe (z.B. D2) jeweils nur jenes Flächenbereiches oder jener Gruppe von Flächenbereichen (22, 24, 26) auf dem Bildschirm (16) angezeigt werden auf dem bzw. der sich der Cursor (34) befindet.

19. Brennofen nach Anspruch 18, **dadurch gekennzeichnet, dass** die Farbinformationen wenigstens eines Flächenbereiches oder Gruppen von Flächenbereichen (22, 24, 26) des Bildschirms (16), welche innerhalb der Außenkontur des Zahnes liegen mit einer Vielzahl von in der Steuereinheit des Brennofens (10) gespeicherten Zahnfarben vergleichbar sind und die übereinstimmende Zahnfarbe auf dem Bildschirm (16) anzeigbar ist.

20. Verfahren für den Betrieb eines Brennofens für den Dentalbereich, der eine Anzeigevorrichtung hat, wobei die Anzeigevorrichtung (16) ein Bildschirm (16) ist und wobei auf dem Bildschirm (16) Flächenbereiche (22, 24, 26) dargestellt werden, die zusammen gesehen im Wesentlichen mindestens einen Zahn in Front- und/oder Seitenansicht entsprechen und dass die Flächenbereiche (22, 24, 26) gegeneinander abgegrenzt sind und jeder Flächenbereich (22, 24, 26) ein unterschiedliches Merkmal, wie ein Muster, eine Farbe, eine Helligkeit oder dergleichen, aufweist und das jedes Merkmal einer Zahnfarbe des herzustellenden Zahns entspricht
wobei der Brennofen (10) eine Steuervorrichtung (14) aufweist, die unter anderem die Brennkurve nach den eingestellten Brennkurven steuert, und wobei die Steuervorrichtung auch die Informationen bereitstellt, die für den Zahntechniker sichtbar auf der Anzeigevorrichtung angezeigt werden.

21. Verfahren nach Anspruch 20, **dadurch gekennzeichnet, dass** bei der Herstellung einer Datei für die Zahnfarbenwiedergabe der Zahn in Flächenbereiche (22, 24, 26) mit ähnlicher Zahnfarbe aufgeteilt wird, wobei die Flächenbereiche (22, 24, 26) aneinander angrenzen.

22. Verfahren gemäß einem der Ansprüche 20 und 21, **dadurch gekennzeichnet, dass** in die Datei zusätzlich zu den in Grobdarstellung vorgegebenen Zahnfarbenbereichen patientenspezifische Daten abgespeichert sind und dass ein Bild mit der Darstellung wenigstens eines Zahnes und/oder die Datei vom Zahnarzt oder Zahntechniker in das Labor übermittelt werden, in dem der Brennofen (10) aufgestellt ist.

23. Verfahren nach einem der Ansprüche 21 oder 22, **dadurch gekennzeichnet, dass** das Bild und/oder die Datei über eine Datenschnittstelle und/oder ein Datenträgerlesegerät (50) in daß Steuervorrichtung (14) des Brennofens (10) eingelesen wird.

24. Verfahren nach einem der Ansprüche 21 bis 23, **dadurch gekennzeichnet, dass** mit den Flächenbereichen (22, 24, 26) in kodierter Form, also durch Farben, Schraffuren oder dergleichen, optisch unterscheidbare Merkmale des Nachbarzahns zu dem zu restaurierenden Zahn dargestellt werden.

25. Verfahren nach einem der Ansprüche 23 bis 24, **dadurch gekennzeichnet, dass** der Brennofen (10) eine dem Bildschirm (16) zugeordnete Eingabeeinheit aufweist, die einen Cursor (34) steuert und dass die Zahnfarben der optisch unterscheidbaren Merkmale angezeigt werden, wenn der Cursor (34) sich in einem der mindestens zwei Flächenbereiche (22, 24, 26) befindet.

26. Verfahren nach Anspruch 25, **dadurch gekennzeichnet, dass** die Zahnfarbe des Flächenbereiches angezeigt wird, in dem sich der Cursor (34) befindet.

27. Verfahren nach einem der Ansprüche 21 bis 26, **dadurch gekennzeichnet, dass** die Steuervorrichtung (14) eine Vergleichseinheit aufweist, und dass in der Steuervorrichtung (14) eine Vielzahl von Zahnfarben abgespeichert sind und dass die betreffende Zahnfarbe dann angezeigt wird, wenn ein Cursor (34) auf dem Bildschirm (16) sich in einem Flächenbereich (22, 24, 26) befindet, der die betreffende Zahnfarbe anzeigt.

28. Verfahren nach Anspruch 27, **dadurch gekennzeichnet, dass** mit dem Cursor (34) mehrere Flächenbereiche (22, 24, 26) als Gruppe zusammenfassbar sind, die Durchschnittsfarbe aller Flächenbereiche (22, 24, 26) ermittelt und mit den abgespeicherten Zahnfarben verglichen sowie die betreffende Zahnfarbe angezeigt wird.

29. Verfahren nach einem der Ansprüche 22 bis 26, **dadurch gekennzeichnet, dass** die Eingabeeinheit eine Zoom- und/oder Bewegungseinrichtung beinhaltet, mit der die Position des Bildes auf dem Bildschirm (16) sowie Größe des auf dem Bildschirm (16) dargestellten Bildes verändert.

30. Verfahren nach einem der Ansprüche 20 bis 29, **dadurch gekennzeichnet, dass** mit der Eingabeeinheit eine Art Rahmen um mehrere Bildpunkte oder Gruppen von Bildpunkten ziehbar ist, die Durchschnittsfarbe innerhalb dieses Rahmens ermittelt und mit den gespeicherten Zahnfarben verglichen wird und die übereinstimmende Zahnfarbe auf dem Bildschirm (16) angezeigt wird.

## Claims

1. A kiln for dental restoration parts comprising a display device having an image screen for displaying information, said image screen (16) comprising at least two, and in particular at least three surface areas (22, 24, 26) with which optically distinguishable features such as different colours, patterns or structures, can be expressed, and said surface areas (22, 24, 26) together substantially forming a front and/or side view of at least one tooth, wherein said dental kiln (10) comprises a control device (14) that serves to control inter alia the firing curve according to the set firing curves, and wherein the control device (14) also provides the information that may be displayed to the dental technician on the display device in a visible manner.

2. The dental kiln as claimed in claim 1, **characterized in that** the surface areas (22, 24, 26) each correspond to different tooth colour regions of at least one tooth that is to be kilned.

3. The dental kiln as claimed in claim 1 or 2, **characterized in that** the surface areas (22, 24, 26) are each formed contiguously.

4. The dental kiln as claimed in one of the preceding claims, **characterized in that** adjacent ones of said surface areas (22, 24, 26) are demarcated from one another in a manner free of transition.

5. The dental kiln as claimed in one of the preceding claims, **characterized in that** surface areas (22, 24, 26) that are present in the same color, correspond to the the same tooth colours.

6. The dental kiln as claimed in one of the preceding claims, **characterized in that** the surface areas (22, 24, 26) are additionally provided with a tooth colour coding such as C1, D2 or some other tooth colour coding that is illustrated on said image screen (16) within or outside of said surface area (22, 24, 26).

7. The dental kiln as claimed in one of the preceding claims, **characterized in that** the image screen (16) is connected to the control device that comprises a data input (52) by means of which an image and/or a data file having at least the tooth colours of the individual colour regions of the image can be fed into and stored in said control device.

8. The dental kiln as claimed in claim 7, **characterized in that** a data carrier reader (50) and/or a data input interface are/is provided for feeding in or entering the image and the data file.

9. The dental kiln as claimed in one of the preceding claims, **characterized in that** said surface areas (22, 24, 26) are distinguishable from one another by means of differently coloured surfaces, patterns such as hatchings, brightness values or other patterns.

10. The dental kiln as claimed in one of the preceding claims, **characterized in that** the shape of the surface areas (22, 24, 26) illustrated on the image screen (16), when viewed together, corresponds to the shape of a tooth that is to be produced.

11. The dental kiln as claimed in one of the preceding claims, **characterized in that** optically distinguishable features also include colour gradients that can be illustrated via specially configured surface areas (22, 24, 26).

12. The dental kiln as claimed in one of the preceding claims, **characterized in that** multimedia information may be fed into the control device, wherein said multimedia information may then be represented in the form of acoustical sequences and/or may be illustrated on said image screen (16) in the form of moving images.

13. The dental kiln as claimed in in one of the preceding claims, **characterized in that** the information may be fed in or entered in the form of electronic data files.

14. The dental kiln as claimed in claim 13, **characterized in that** the data input circuit (52) is a modem, a data import/export interface of the dental kiln (10) and/or a data carrier reader that cooperates with the dental kiln.

15. The dental kiln as claimed in claim 13, **characterized in that** the graphic portion of the information is a jpg, bmp, tif, pdf, ppt or avi data file.

16. The dental kiln as claimed in claimed in one of the preceding claims, **characterized in that** the size and/or position of the graphic information on said image screen (16) may be varied with the aid of an input unit that is associated with said image screen (16).

17. The dental kiln as claimed in claim 1, **characterized in that** at least those ones of said surface areas (22, 24, 26) that are disposed within the outer contour of the tooth, are adapted to be supplied with colour information with respect to the tooth colours of the tooth that are present in these surface areas.

18. The dental kiln as claimed in claim 17, **characterized in that** the dental kiln (10) comprises an input unit that is associated with the the image screen (16) and with which a cursor (34) may be controlled that is movable over said surface areas (22, 24, 26) or groups of surface areas (22, 24, 26) of the image screen, and that the colour information, in particular as a tooth colour (e.g. D2), of only that surface area or group of surface areas (22, 24, 26) is indicated on the image screen (16) upon which the cursor (34) is disposed.

19. The dental kiln as claimed in claim 18, **characterized in that** the colour information of at least one surface area or group of surface areas (22, 24, 26) of said image screen (16), which colour information lies within an outer contour of the tooth, is adapted to be compared with a plurality of tooth colours stored in the control unit of said dental kiln (10), with coinciding tooth colors being adapted to be indicated on said image screen (16).

20. A method of operating a kiln for use in the dental field, said dental kiln comprising a display device, wherein said display device (16) is an image screen (16) and wherein surface areas (22, 24, 26) are represented on said image screen (16) that, when viewed together, essentially correspond to a front and/or side view of at least one tooth, wherein said surface areas (22, 24, 26) are demarcated from one another and each surface area (22, 24, 26) has a distinguishable feature, such as pattern, colour, brightness or the like, and wherein each feature corresponds to a tooth colour of a tooth that is to be produced, wherein the dental kiln (10) comprises a control device (14) that inter alia serves to control the firing curve according to the set firing curves, and wherein the control device (14) also provides the information that may be displayed to the dental technician on the display device in a visible manner.

21. The method as claimed in claim 20 **characterized in that** for producing a data file for the tooth colour reproduction, the tooth is divided into surface areas (22, 24, 26) having similar tooth colours, wherein the surface areas (22, 24, 26) adjoin one another.

22. The method as claimed in claim 20 and 21, **characterized in that** in addition to tooth colour regions prescribed in broad illustration, patient-specific data is stored in said data file, and that an image illustrating at least one tooth, and/or data from a dentist or dental technician, is transmitted to the dental lab where the dental kiln (10) is set up.

23. The method as claimed in claim 21 and 22, **characterized in that** the image and/or the data file are/is read into the control device (14) of the dental kiln (10) via a data interface and/or a data carrier reader.

24. The method as claimed in one of the claims 21 to 23, **characterized in that** via said surface areas (22, 24, 26) optically distinguishable features of a tooth adjacent to the tooth that is to be restored are illustrated in coded form, i.e. by colours, hachures or the like.

25. The method as claimed in claim 23 and 24, **characterized in that** the dental kiln (10) comprises an input unit that is associated with said image screen (16) and that controls a cursor (34), and **in that** the tooth colours of the optically distinguishable features are displayed when the cursor is disposed in one of the at least two surface areas (22, 24, 26).

26. The method as claimed in claim 25, **characterized in that** the tooth colour of each surface area, in which said cursor (34) is disposed, is displayed.

27. The method as claimed in one of the claims 21 to 26, **characterized in that** the control device (14) comprises a comparison unit, and that in said control device (14) a plurality of tooth colours is stored and that the respective tooth colour is displayed when a cursor (34) on said image screen (16) is disposed in a surface area (22, 24, 26) that indicates the respective tooth colour.

28. The method as claimed in claim 27, **characterized in that** several surface areas (22, 24, 26) may be grouped together via the cursor (34), the average colour of all of said surface areas (22, 24, 26) is determined and compared with the stored tooth colours, and the respective tooth colour is indicated.

29. The method as claimed in one of the claims 22 to 26, **characterized in that** the input unit contains a zoom and/or movement device, with which the position of the image on the image screen (16) as well as the size of the image illustrated on the image screen (16), are varied.

30. The method as claimed in one of the claims 20 to 29, **characterized in that** a type of frame can be achieved with said input unit about several image points or groups of image points, that the average colour within said frame is determined and compared with the stored tooth colours, and that the coinciding or matching tooth colour is displayed on the image screen (16).

## Revendications

1. Four pour des pièces de restauration dentaire, avec un dispositif d'affichage avec un écran pour afficher des informations, où l'écran (16) présente au moins deux, de préférence au moins trois zones de surface (22, 24, 26), avec lesquels des caractéristiques visuellement discernables, telles que des teintes, des formes ou des structures différentes, sont reproductibles, et où les zones de surface (22, 24, 26) prises ensemble se complètent essentiellement en au moins une dent vue de face ou de côté, où le four (10) présente un dispositif de commande (14) qui sert entre autres à la commande des courbes de cuisson d'après les courbes de cuisson prédéterminées et où le dispositif de commande (14) fournit aussi les informations qui sont présentables visuellement pour le technicien dentaire sur le dispositif d'affichage.

2. Four, selon la revendication 1, **caractérisé en ce que** les zones de surface (22, 24, 26) correspondent chacune à des zones de teinte dentaire différentes d'au moins une dent à cuire.

3. Four selon la revendication 1 ou 2, **caractérisé en ce que** les zones de surface (22 24 26) sont formées contiguës.

4. Four selon l'une des revendications précédentes, **caractérisé en ce que** des zones de surface (22, 24, 26) contiguës sont définies les unes par rapport aux autres sans transition.

5. Four selon l'une des revendications précédentes, **caractérisé en ce que** toutes les zones de surface présentes dans la même teinte (22 24 26) correspondent aux mêmes teintes dentaires.

6. Four selon l'une des revendications précédentes, **caractérisé en ce que** les zones de surface (22 24, 26) sont munies en plus d'un codage de teinte dentaire comme « Cl », « D2 » ou un autre codage de teinte dentaire, qui est représenté sur l'écran (16) à l'intérieur ou à l'extérieur de la zone de surface (22, 24 26).

7. Four selon l'une des revendications précédentes, **caractérisé en ce que** l'écran (16) est relié au dispositif de commande, qui présente une entrée de données (52), par laquelle une image et/ou un fichier avec au moins les teintes dentaires des différentes zones de teintes de l'image sont introduisibles dans le dispositif de commande et mémorisables dans le dispositif de commande.

8. Four selon la revendication 7, **caractérisé en ce qu'**un lecteur de support de données (50) et/ou une interface d'entrée de données sont prévus pour introduire de l'image et le fichier.

9. Four selon l'une des revendications précédentes, **caractérisé en ce que** les zones de surface (22, 24, 26) se différencient les unes par rapport aux autres par des surfaces de teintes différentes, des motifs comme des hachures, des valeurs de luminosité ou d'autres motifs.

10. Four selon l'une des revendications précédentes, **caractérisé en ce que** la forme des zones de surface (22, 24, 26) qui sont représentées à l'écran (16), dans sa synthèse correspond à la forme d'une dent à fabriquer.

11. Four selon l'une des revendications précédentes, **caractérisé en ce que** des dégradés de teinte font partie aussi des caractéristiques optiques discernables qui sont représentables avec des zones de surface particulièrement développées (22, 24, 26).

12. Four selon l'une des revendications précédentes, **caractérisé en ce que** dans le dispositif de commande, des informations multimédia sont introduisibles qui par la suite peuvent être reproduites sous la forme de séquences acoustiques et/ou représentées à l'écran (16) sous la forme d'images en mouvement.

13. Four selon l'une des revendications précédentes, **caractérisé en ce que** l'information est mémorisable sous forme de fichiers électroniques.

14. Four selon la revendication 13 **caractérisé en ce que** le cours (52) présente un modem, une interface importation/exportation de données du four (10) et/ou un lecteur de support de données (50), concourant avec le four (10).

15. Four selon la revendication 13, **caractérisé en ce qu'**en ce qui concerne la partie graphique de l'information, il s'agit de fichiers jpg-, bmp-, tif-, pdf-. ppt-, d'avi-.

16. Four selon l'une des revendications précédentes, **caractérisé en ce que** la dimension et/ou la position de l'information graphique sur l'écran (16) sont modifiables à l'aide d'une unité d'entrée attribuée à l'écran (16).

17. Four selon la revendication 1, **caractérisé en ce qu'**au moins les zones de surface se trouvant à l'intérieur du profil extérieur de la dent (22, 24, 26) sont approvisionnables avec des informations des teintes par rapport aux teintes dentaires de la dent présentes dans ces zones de surface.

18. Four selon la revendication 17, **caractérisé en ce que** le four (10) présente une unité d'entrée attribuée à l'écran avec laquelle est dirigée un curseur (34) mobile sur les zones de surface (22, 24, 26) ou les groupes de zones de surface (22, 24, 26) de l'écran (16), et que les informations de teintes, de préférence comme teinte dentaire (p. ex. D2) uniquement de la zone de surface ou du groupe de zones de surface (22, 24, 26) sur laquelle ou sur lequel se trouve le curseur (34) sont respectivement affichées à l'écran (16).

19. Four selon la revendication 18, **caractérisé en ce que** les informations de teintes dau moins une zone de surface ou groupes de zones de surface (22, 24, 26) de l'écran (16) qui se trouvent à l'intérieur des profils extérieurs de la dent sont comparables à une pluralité de teintes dentaires stockées dans le module de commande du four (10) et la teinte dentaire correspondante est affichable sur l'écran (16).

20. Procédure de fonctionnement d'un four pour le domaine dentaire ayant un dispositif d'affichage, où le dispositif d'affichage (16) est un écran (16) et où des zones de surface (22, 24, 26) sont représentées à l'écran (16), qui, vues ensemble, correspondent essentiellement à au moins une dent, vue de face ou de côté, et où les zones de surface (22, 24, 26) sont délimitées les unes par rapport aux autres et chaque zone de surface (22, 24, 26) correspond à une caractéristique différente, comme une forme, une teinte, une luminosité ou similaire et que chaque caractéristique correspond à une teinte dentaire de la dent à fabriquer, où le four présente un dispositif de commande (14) qui commande entre autres la courbe de cuisson d'après les courbes de combustible prédéfinies, et où le dispositif de commande fournit aussi les informations qui sont présentées visuellement pour le technicien dentaire sur le dispositif d'affichage

21. Procédure selon la revendication 20, **caractérisée en ce que** lors de la fabrication d'un fichier pour la reproduction de la teinte dentaire, la dent est répartie en zones de surface (22, 24, 26) avec une teinte dentaire similaire, où les zones de surface (22, 24, 26) sont contiguës.

22. Procédure selon l'une des revendications 20 et 21 **caractérisée en ce que** des données spécifiques du patient sont stockées en plus des zones de teinte dentaires prédéfinies dans une représentation approximative dans le fichier, et qu'une image avec la représentation d'au moins une dent et/ou le fichier est communiquée par le dentiste ou le technicien dentaire au laboratoire dans lequel le four (10) est établi.

23. Procédure selon l'une des revendications 21 ou 22, **caractérisée en ce que** l'image et/ou le fichier sont rentrés dans le dispositif de commande (14) du four (10) par une interface et/ou un lecteur de support de données (50).

24. Procédure selon l'une des revendications 21 à 23, **caractérisée en ce qu'**avec les zones de surface (22, 24, 26) des caractéristiques de la dent voisine, différenciables au niveau optique sont représentées en forme codée, c-à-d par des teintes, des hachures ou similaires, sur la dent à restaurer.

25. Procédure selon l'une des revendications 23 à 24, **caractérisée en ce que** le four (10) présente une unité d'entrée attribuée à l'écran qui commande un curseur (34) et que les teintes dentaires des caractéristiques différenciables au niveau optique sont affichées, quand le curseur (34) se trouve dans un des au moins deux zones de surface (22, 24, 26).

26. Procédure selon la revendication 25, **caractérisée en ce que** la teinte dentaire de chaque zone de surface est affichée, dans lequel se trouve le curseur (34).

27. Procédure selon l'une des revendications 21 à 26, **caractérisée en ce que** le dispositif de commande (14) présente une unité de comparaison, et qu'une multiplicité de teintes dentaires est stocké dans le dispositif de commande (14) et que la teinte dentaire concernée est affichée lorsqu'un curseur (34) se trouve dans une zone de surface (22, 24, 26) à l'écran (16) qui affiche la teinte dentaire concernée.

28. Procédure selon la revendication 27, **caractérisée en ce que** plusieurs zones de surface (22, 24, 26) peuvent être réunies en tant que groupe avec le curseur (34), la teinte moyenne des toutes les zones de surface (22 24 26) est calculée et comparée avec les teintes dentaires stockées et la teinte dentaire concernée est affichée.

29. Procédure selon l'une des revendications 21 à 26, **caractérisée en ce que** l'unité d'entrée comprend un dispositif de mouvement et/ou de zoom, avec laquelle la position de l'image à l'écran (16) ainsi que la dimension de l'image représentée à l'écran (16) sont modifiées.

30. Procédure selon l'une des revendications 20 à 29, **caractérisé en ce qu'**avec l'unité d'entrée, une sorte de cadre peut être tiré autour de plusieurs points de l'image ou de groupes de points d'image, la teinte moyenne dans ce cadre est déterminée et comparée aux teintes dentaires stockées, et la teinte dentaire correspondante est affichée à l'écran (16).
